# EUROPÄISCHE PATENTANMELDUNG

(11) **EP 1 630 655 A2**
(43) Veröffentlichungstag der Anmeldung: **01.03.2006**
(21) Anmeldenummer: 05018511.5
(22) Anmeldetag: 25.08.2005
(51) Int. Cl.: G06F 3/033

(54) **Maus-Pad**

(30) Priorität: 26.08.2004 DE 202004013466 U
(71) Anmelder: Bilski, Ralph, 76275 Ettlingen (DE)
(72) Erfinder: Bilski, Ralph, 76275 Ettlingen (DE)
(74) Vertreter: Brommer, Hans Joachim

(57) **Zusammenfassung**

Die Erfindung betrifft ein beleuchtbares Maus-Pad für Computer, welches zumindest eine Aussparung aufweist. In dieser Aussparung ist eine elektrische Lampe, insbesondere eine Leuchtdiode angeordnet und die Oberseite des Pads ist im Bereich der Leuchtdiode lichtdurchlässig.

## Beschreibung

Die Erfindung betrifft ein beleuchtbares Maus-Pad für Computer. Ein derartiges Maus-Pad ist in der Form bekannt geworden, dass das eigentliche Pad von einem Rahmen umgeben ist, der aus Acrylleisten besteht, die aufgrund einer lokalen Lichteingabe wie Leuchtröhren wirken.

Der vorliegenden Erfindung liegt die Aufgabe zugrunde, ein derartiges beleuchtbares Pad in neuen Ausgestaltungen anzubieten, insbesondere neue Erscheinungsformen und Anwendungsmöglichkeiten zu eröffnen. Dabei soll die bewährte Funktion des Pads als Maus-Oberfläche in vollem Umfang gewahrt bleiben.

Diese Aufgabe wird erfindungsgemäß dadurch gelöst, dass das Pad mehrere Aussparungen aufweist, dass in diesen Aussparungen zumindest elektrische Lampen, insbesondere Leuchtdioden angeordnet sind und dass die Oberseite des Pads im Bereich der Leuchtdioden lichtdurchlässig ist.

Dadurch bietet sich die Möglichkeit, an der Oberseite des Pads die unterschiedlichsten Darstellungen, Bilder, Symbole etc. anzubringen und diese von unten zu beleuchten. Das Pad erhält dadurch einen außerordentlichen optischen Reiz, weil die bisher tote Oberfläche jetzt lokal ausgeleuchtet wird. Zusätzlich eignet sich das erfindungsgemäße Pad auch hervorragend als Werbeträger.

Seine Funktion wird durch die eingebauten Leuchtdioden in keiner Weise beeinträchtigt, weil die Oberfläche des Pads unverändert bleibt. Die Aussparungen, in denen die elektrischen Lampen, vorzugsweise die Leuchtdioden, untergebracht sind, können theoretisch von beliebigen Seiten, auch von den schmalen Randseiten des Pads ausgehen; im allgemeinen empfiehlt es sich aber, diese Aussparungen von der Unterseite des Pads ausgehen zu lassen und sie nach dem Einsetzen der Leuchtdioden zumindest teilweise durch eine Folie abzudecken.

Zweckmäßig wird auch die Anschlussleitung für die Leuchtdioden in einer entsprechenden Aussparung des Pads verlegt, so dass sie optisch nicht in Erscheinung tritt, sondern unsichtbar bis zu einem gemeinsamen Verbindungspunkt läuft, wo die einzelnen Anschlusskabel der Leuchtdioden zusammentreffen.

Des Weiteren besteht die Möglichkeit, die Aussparungen auch so zu gestalten, dass die Leuchtdioden und/oder deren Anschlusskabel in den Aussparungen fixiert, insbesondere verklemmt werden können.

Eine besonders eindrucksvolle optische Wirkung lässt sich dadurch erzielen, dass die lichtdurchlässigen Bereiche an der Oberseite des Pads zumindest teilweise von lichtundurchlässigen Bereichen umgeben sind. Man kann dadurch eine relativ scharfe Hell-/Dunkel-Grenze erzeugen, die optisch besonders auffällig ist.

Die lichtundurchlässigen Bereiche können bei einer lichtdurchlässigen Oberseite des Pads am einfachsten dadurch erzeugt werden, dass ein lichtundurchlässiges Füllmaterial unter der Oberseite des Pads verwendet wird und die Aussparungen soweit um die Leuchtdioden herumlaufen, wie der lichtdurchlässige Bereich dimensioniert werden soll. Statt dessen besteht aber auch die Möglichkeit, aus Fertigungsgründen mit größeren Aussparungen, die unabhängig von den gewünschten Lichteffekten die gleiche Form aufweisen können, zu arbeiten und die lichtdurchlässigen Bereiche durch lichtundurchlässige Begrenzungsbänder zu bilden, die in dem gewünschten Abstand um die Leuchtdioden herum verlaufen.

Nach oben werden die lichtundurchlässigen Bereiche am einfachsten durch eine entsprechend undurchlässige Oberseite des Pads oder durch eine Beschichtung an der Unterseite der obersten Pad-Lage erzeugt.

Falls die Aussparungen sehr großflächig sind, kann es zweckmäßig sein, Distanzstücke zwischen Ober- und Unterseite des Pads anzuordnen, damit die Oberseite des Pads im Bereich der Aussparung abgestützt wird und sich nicht durch das Auflegen der Hand einbeult.

Die Stromversorgung der Lampen, insbesondere der Leuchtdioden, kann entweder durch eine Batterie erfolgen, wobei es sich empfiehlt, in dem Pad eine Aussparung vorzusehen, in der die Batterie, vorzugsweise in Form von Knopfzellen, untergebracht werden kann. In den meisten Fällen ist es aber günstiger, wenn das Pad eine vom äußeren Rand ausgehende Anschlussleitung aufweist, die im Inneren des Pads an die Anschlusskabel der Leuchtdioden angeschlossen ist und außen für den USB-Anschluss des Computers passt. Dadurch wird das Pad automatisch beleuchtet, sobald der Computer angeschaltet wird.

Schließlich liegt es im Rahmen der Erfindung, in einer Aussparung des Pads eine elektronische Schaltung unterzubringen, insbesondere für eine gezielte Ansteuerung der Leuchtdioden, beispielsweise um eine fortlaufende Lichterkette oder dergleichen zu erzeugen.

Weitere Merkmale und Vorteile der Erfindung ergeben sich aus der nachfolgenden Beschreibung von Ausführungsbeispielen anhand der Zeichnung; dabei zeigt
- Figur 1a: eine Ansicht auf das Maus-Pad von oben;
- Figur 1b: eine Ansicht auf das gleiche Maus-Pad von unten bei weggelassener Unterlage;
- Figur 2a: eine Ansicht auf ein anderes Maus-Pad von oben und
- Figur 2b: die Ansicht auf das Maus-Pad von Figur 2a von unten bei weggelassener Unterlage.

Das Maus-Pad hat zunächst den herkömmlichen Aufbau und besteht aus mindestens zwei Lagen, nämlich aus einer glatten und relativ verschleißfesten oberen Lage und einer deutlich dickeren elastischen Hauptlage, insbesondere aus Moosgummi oder dergleichen. Meist ist die Hauptlage an der Unterseite noch durch eine glatte Unterlage abgedeckt.

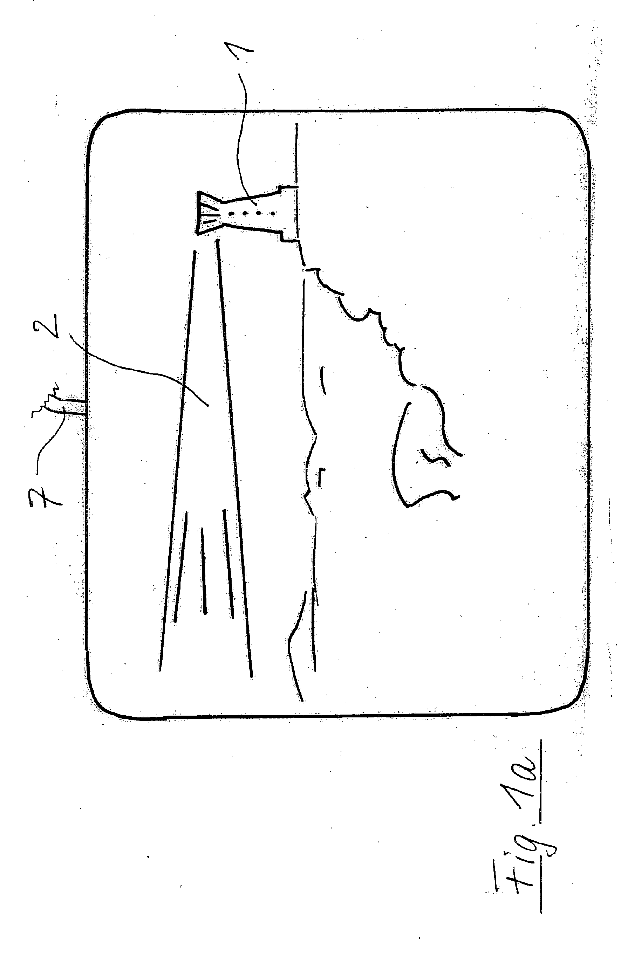

Gemäß Figur 1a sieht man an der Oberseite des Maus-Pads eine Abbildung, im Ausführungsbeispiel in Gestalt eines Küsten-Abschnittes mit einem Leuchtturm 1, der einen horizontalen Lichtkegel 2 aussendet. Diese Abbildung kann direkt an der Unterseite der oberen Lage des Maus-Pads, ebenso aber auch in einer zusätzlichen Zwischenlage angeordnet sein.

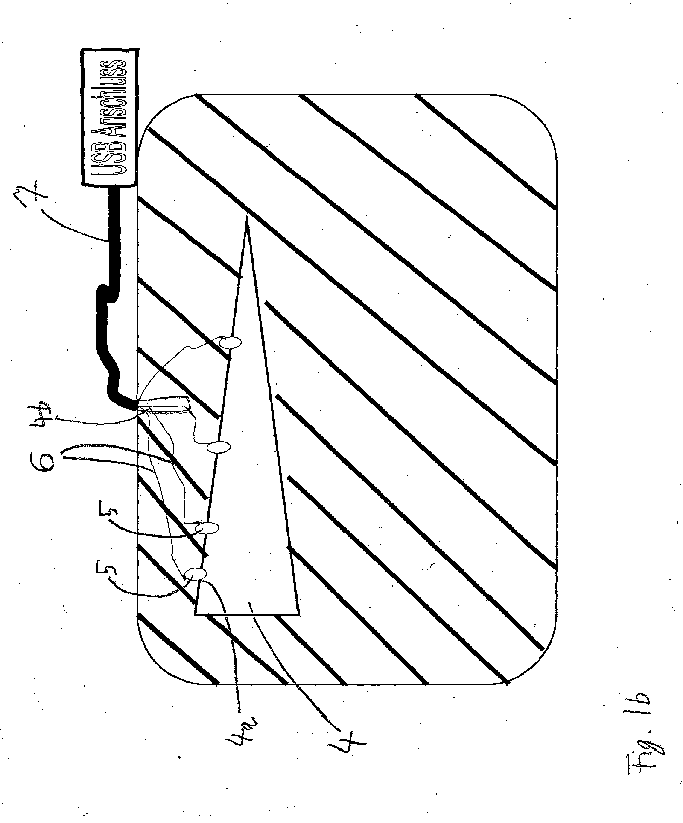

Wesentlich ist nun, dass Teile der gezeigten Abbildung von unten beleuchtet werden. Hierzu ist das Maus-Pad ― konkret die in Figur 1 b abgebildete Hauptlage 3 ― mit lokalen Aussparungen versehen. Die hauptsächliche Aussparung 4 entspricht in ihrer Form etwa dem vom Leuchtturm 1 ausgehenden Lichtkegel 2 und sie durchquert die Hauptlage 3 nach oben bis zu der die Abbildung tragenden Lage. Diese Lage muss ebenso wie eine eventuell darüber angeordnete Beschichtung lichtdurchlässig sein. Demgegenüber ist die Hauptlage 3 lichtundurchlässig, so dass die Aussparung 4 einen konkret abgegrenzten Bereich definiert, der durch mehrere Leuchtdioden 5 ausgeleuchtet wird.

Die Leuchtdioden 5 sind zweckmäßig in passenden Aussparungen 4a, die sich an die Aussparung 4 anschließen, verklemmt. Sie sind etwa gleichmäßig über die Länge des Lichtkegels verteilt. An ihrem in der Hauptlage 3 steckenden Ende weisen die Leuchtdioden Anschlusskabel 6 auf, die ebenfalls in oder an der Hauptlage 3 entlang verlegt sind, bis sie in eine gemeinsame Anschlussleitung 7 münden. Für die Anschlusskabel 6 können ebenfalls Aussparungen in dem Maus-Pad vorgesehen sein, meist sind diese Leitungen aber so dünn, dass sie sich einfach in das elastische Material der Hauptlage 3 eindrücken. Lediglich im Bereich der Anschlussleitung 7 bis zu ihrer Vereinzelung auf die einzelnen Kabel 6 empfiehlt es sich, die Hauptlage 3 mit einer entsprechenden Aussparung 4b zu versehen. Diese Aussparung 4b und damit auch die Anschlussleitung mündet an einer der Stirnseiten, vorzugsweise an der hinteren Stirnseite des Maus-Pads. Die Anschlussleitung 7 hat an ihrem freien Ende einen USB-Anschluss, so dass sie automatisch mit Strom versorgt wird, sobald der Computer angeschaltet wird.

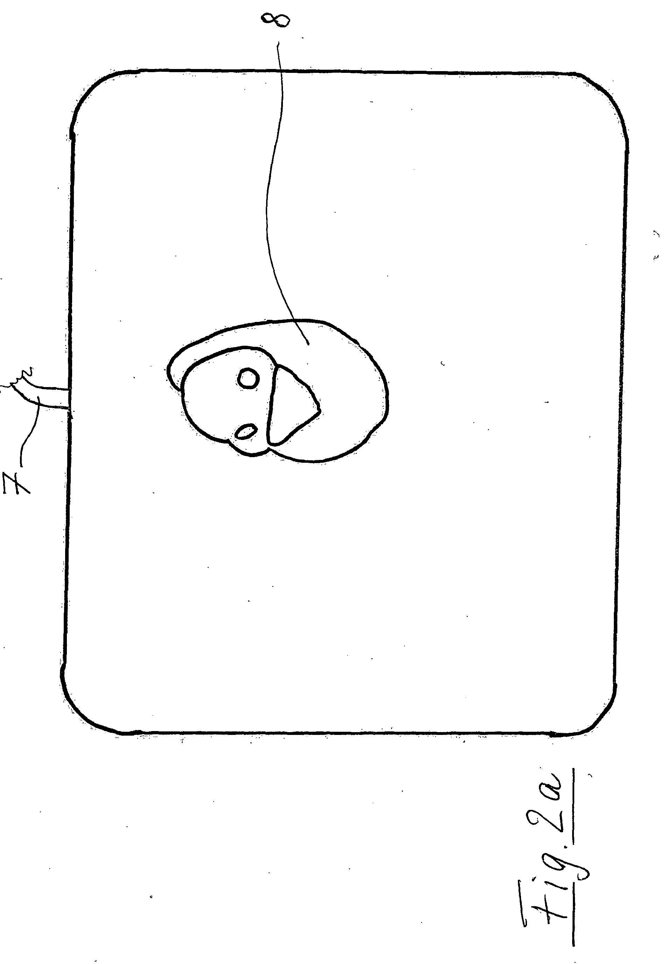

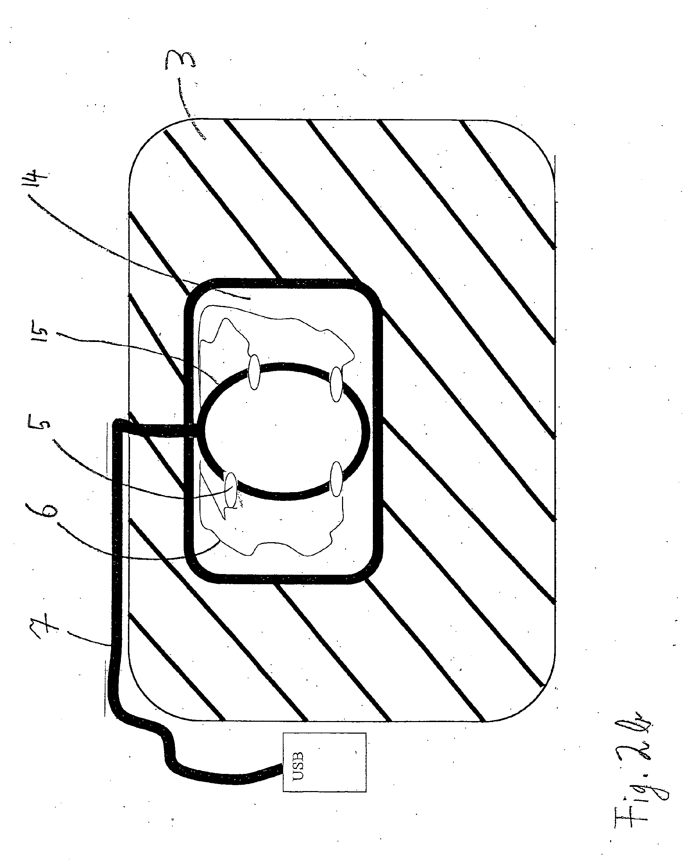

In dem beschriebenen Ausführungsbeispiel wird also der auszuleuchtende Bereich direkt durch die Aussparung 4 definiert. Alternativ besteht aber auch die Möglichkeit, mit größeren Aussparungen zu arbeiten und den auszuleuchtenden Bereich durch ein oder mehrere lichtundurchlässige Begrenzungsbänder zu definieren. Dies erschließt sich aus dem in Figur 2a und 2b dargestellten Ausführungsbeispiel. Man erkennt hier wieder an der Oberseite des Maus-Pads gemäß Figur 2a eine Abbildung, dieses Mal in Form einer Spielente 8. Unterhalb dieser Spielente befindet sich nun gemäß Figur 2b eine Aussparung 14, die wesentlich größer ist, als die Spielente und als der Bereich, der ausgeleuchtet werden soll. Innerhalb der Aussparung 14 und zu ihrem Rand beabstandet ist ein Begrenzungsband 15 verlegt. Dieses Begrenzungsband umschließt den auszuleuchtenden Bereich, ist also in der Kontur etwa auf die Größe der Spielente 8 abgestimmt. Es ist zweckmäßig an eine der Lagen angeklebt, die oberhalb oder unterhalb der Hauptlage 3 liegen.

Eine weitere Besonderheit dieses Ausführungsbeispiels besteht darin, dass das Begrenzungsband 15 auch noch die Leuchtdioden 5 trägt. Dazu hat das Begrenzungsband entsprechende Öffnungen, in welchen die Leuchtdioden verklemmt sind, derart, dass das vordere leuchtende Ende in den Innenraum hineinragt, der von dem Begrenzungsband umschlossen wird, während das rückwärtige Ende mit dem Anschlusskabel in den Zwischenraum zwischen Begrenzungsband und Aussparung 14 hineinragt. In diesem Zwischenraum können die Anschlusskabel 6 lose bis zu der gemeinsamen Anschlussleitung 7 verlegt werden. Die Anschlussleitung 7 läuft wieder stirnseits durch eine entsprechende Aussparung 4b in der Hauptlage 3 in die Aussparung 14 hinein.

Die zuletzt beschriebene Alternative hat den Vorteil, dass unterschiedliche Leuchtbereiche durch individuelle Verlegung des Begrenzungsbandes 15 oder mehrere Begrenzungsbänder erzeugt werden können, ohne dass dabei die Kontur der Aussparung 14 geändert werden muss. Nicht zuletzt können die unterschiedlichen Leuchtbereiche auch allein durch lichtdurchlässige und lichtundurchlässige Gestaltungen der oberen Pad-Lage(n) definiert werden.

Die Aussparungen 4 und 14 können die Hauptlage 3 über deren gesamte Materialstärke durchqueren. Es liegt aber selbstverständlich auch im Rahmen der Erfindung, die Aussparungen nur im oberen Bereich der Hauptlage 3 vorzusehen.

Auch können statt Leuchtdioden selbstverständlich andere Leuchtmittel eingesetzt werden.

Zur Erzeugung besonders scharfer Hell-/Dunkel-Kontraste liegt es außerdem im Rahmen der Erfindung, diejenige Lage, die die Abbildung trägt, oder eine darüber angeordnete Lage lokal mit lichtundurchlässigem Material zu beschichten. Dadurch lassen sich Hell-/Dunkel-Grenzen erzeugen, die unabhängig von der Form der Aussparung 4 bzw. des Begrenzungsbandes 15 sind.

Zusammenfassend zeichnet sich die Erfindung dadurch aus, dass durch die in Aussparungen des Pads untergebrachten Leuchtmittel völlig neue optische Effekte erzeugt werden können.

## Patentansprüche

1. Beleuchtbares Maus-Pad für Computer,
**dadurch gekennzeichnet,**
**dass** das Maus-Pad zumindest eine Aussparung (4, 14) aufweist, dass in dieser Aussparung (4, 14) zumindest eine elektrische Lampe, insbesondere Leuchtdiode (5) angeordnet ist und dass die Oberseite des Pads im Bereich der Leuchtdiode (5) lichtdurchlässig ist.

2. Maus-Pad nach Anspruch 1,
**dadurch gekennzeichnet,**
**dass** die Aussparung (4, 14) in einer vergleichsweise dicken Hauptlage (3) des Pads angeordnet sind.

3. Maus-Pad nach Anspruch 1,
**dadurch gekennzeichnet,**
**dass** zumindest eine zusätzliche Aussparung (4b) für eine vom äußeren Rand des Pads ausgehende Anschlussleitung (7) in dem Pad angeordnet ist.

4. Maus-Pad nach Anspruch 1,
**dadurch gekennzeichnet,**
**dass** die Aussparung (4, 14) und gegebenenfalls die Aussparung (4b) für die Anschlussleitung (7) von der Unter- oder Oberseite der Hauptlage (3) des Pads zugänglich sind.

5. Maus-Pad nach Anspruch 1,
**dadurch gekennzeichnet,**
**dass** die Aussparungen (4, 14) zumindest teilweise abgedeckt sind.

6. Maus-Pad nach Anspruch 1,
**dadurch gekennzeichnet,**
**dass** die Leuchtdioden (5) am Rand der Aussparung (4) verklemmt sind.

7. Maus-Pad nach Anspruch 1,
**dadurch gekennzeichnet,**
**dass** die auszuleuchtenden Bereiche durch die Aussparung (4) gebildet sind.

8. Maus-Pad nach Anspruch 1,
**dadurch gekennzeichnet,**
**dass** die auszuleuchtenden Bereiche durch zumindest ein Begrenzungsband (15) gebildet sind.

9. Maus-Pad nach Anspruch 8,
**dadurch gekennzeichnet,**
**dass** das Begrenzungsband (15) die Leuchtdioden (5) trägt.

10. Maus-Pad nach Anspruch 1,
**dadurch gekennzeichnet,**
**dass** lichtundurchlässige Bereiche durch eine Beschichtung (vorzugsweise an der Unterseite der obersten Pad-Lage) gebildet sind.

11. Maus-Pad nach Anspruch 1,
**dadurch gekennzeichnet,**
**dass** in der Aussparung (14) Distanzstücke zwischen Ober- und Unterseite des Pads angeordnet sind.

12. Maus-Pad nach Anspruch 1,
**dadurch gekennzeichnet,**
**dass** es eine Aussparung für eine Batterie aufweist.

13. Maus-Pad nach Anspruch 1,
**dadurch gekennzeichnet,**
**dass** das Maus-Pad eine vom äußeren Rand ausgehende Anschlussleitung (7) aufweist, insbesondere für den USB-Anschluss des Computers.

14. Maus-Pad nach Anspruch 1,
**dadurch gekennzeichnet,**
**dass** in der Aussparung (14) oder einer zusätzlichen Aussparung eine elektronische Schaltung, insbesondere eine Folgesteuerung für die Leuchtdioden angeordnet ist.
